# EUROPEAN PATENT SPECIFICATION

(11) **EP 2 133 474 B1**
(45) Date of publication and mention of the grant of the patent: **18.12.2013**
(21) Application number: 09007776.9
(22) Date of filing: 12.06.2009
(51) Int. Cl.: E01H 1/10, C11D 1/66, C11D 3/00, C11D 3/12, C11D 3/10

(54) **Multi-purpose vehicle, for re-establishment of normal road conditions, after car accidents**
Mehrzweckfahrzeug für die Wiederherstellung von normalen Strassenbedingungen nach Kraftfahrzeugunfällen
Véhicule multi-usage pour le rétablissement de conditions de route normales après un accident de voitures

(30) Priority: 12.06.2008 IT RM20080308
(43) Date of publication of application: 16.12.2009
(73) Proprietor: Sicurezza e Ambiente S.p.A., 00133 Rome (IT)
(72) Inventor: Cacciotti, Angelo, 00133 Rome (IT)
(74) Representative: Zizzari, Massimo

(56) References cited:
- EP-A1- 0 279 729
- WO-A1-01/58607
- US-A- 5 469 597
- US-A- 5 979 012

## Description

The present invention concerns a special vehicle, particularly suitable as an emergency vehicle supporting the activities addressed to re-establish safe and practicable road conditions, through cleaning and extraordinary maintenance of road platform and related parts involved in car accidents. These activities regard, in particular, the intervention of operators directly on site of accident, and the same operators provide the re-establishment of normal road conditions, through cleaning and maintenance of road platform and related parts, through aspiration and collection of liquids and other polluting materials, eventually lost by vehicles, like i.e. lubricating oils, fuels, parts of vehicles and other types of debris. In particular cases, the intervention can involve the treatment of dangerous goods, hazard substances, and industrial wastes transported on the same vehicles.

In particular the invention relates to a multi-purpose vehicle as defined in the preamble of Claim 1. Such a vehicle is known from any of US-A-5979012, US-A-5469597 and EP-A-279729

As known, in the state of the art some special vehicles exist, able to remove polluting materials from road surfaces and platforms. In example, means described in patent US 5.979.012 are composed of a mobile vehicle where two special devices are embedded: a high-pressure steam tank and an equipment for immediate treatment of polluting waters. In a first step, a high-pressure jet of steam is directed towards the surface to be cleaned, so that the particles to be removed are directly concentrated in water that is condensed from steam. In a second step an aspirator collects this water mixed to polluting materials, and forward it to the above said cleaning equipment, where the hazard substances are taken apart and collected in a separate tank, while the water is used again to form new steam or it is safely lost in the environment. Patent US 5.469.597 concerns, instead, a mobile vehicle able to address a jet of fluid with high pressure towards a surface to be cleaned, to collect the resulting liquid eventually mixed to polluting materials, and to filter the same liquid for using it again immediately. Similar solutions are described in respective patents US 5.224.236 and US 5.287.589.

All the well known solutions have a certain number of drawbacks, because they have been not specifically designed and realized for collection of polluting materials after car accidents. These drawbacks are in example:
- the operative procedures do not include any rational method in order to identify properly the chemical polluting substances to be removed, before any intervention, and to define the best methods in order to provide collection and treatment of the same substances;
- the polluting materials are collected as they are, without starting any process addressed to decrease or to remove the hazard immediately, and scheduling the treatment on a following step inside specialized collection plants;
- in some cases, i.e. in draining platforms, some particles of liquid could be entrapped on the road surface, even after treatment with oil absorbent materials, like *fillers,* and they could continue to be a risk for safety of drivers and for environmental protection;
- the operative procedures do not include any rational method in order to lead workers to the exact site of accident, trusting more in their self ability to reach the final destination in a short time, and trusting in their personal equipments as maps and navigation systems;
- the actual used technologies do not permit a global and real time coordination of different types of interventions; in some cases some attempts are made using external devices like standard telephones.

Therefore, the main objective of the present invention is to propose a multi-purpose vehicle, particularly suitable as an emergency vehicle supporting the activities addressed to re-establish safe and practicable road conditions, through cleaning and extraordinary maintenance of road platform and related parts involved in car accidents, and that means through aspiration and collection of liquids and other polluting materials eventually lost on the road.

Therefore, it is specific subject of the present invention a multi-purpose vehicle as defined in Claim 1.

The present invention will now be described for illustrative but not limitative purposes, according to its preferred embodiments, with particular reference to figures of the enclosed drawings, wherein:
figure 1 is a perspective view of a multi-purpose vehicle during the operations of cleaning and extraordinary maintenance of road platform and related parts involved in a car accident;
figure 2 is a perspective view of the same multi-purpose vehicle of figure 1, where it is shown the tank for storage of special washing liquids and polluting liquids collected from the road platform;
figure 3 is a perspective view of the same multi-purpose vehicle of figure 1, where it is shown the operation of removing the polluting liquids collected from the road platform;
figure 4 is a perspective view of an example of road signs, that are installed during the operations of cleaning and extraordinary maintenance of road platform and related parts involved in a car accident;
figure 5 is a perspective view of two operators working on activities of cleaning and extraordinary maintenance of road platform and related parts involved in a car accident;
figure 6 is a perspective view of a set of standard accessories that are part of the equipment for a multi-purpose vehicle.

It is here underlined that, in the following, only some of the many conceivable embodiments of the present invention will be described, and that they are just some particular examples that do not introduce any limitations, having the possibility to describe many other embodiments based on the disclosed technical solutions of the present invention.

In particular, the operations of cleaning and extraordinary maintenance of road platform and related involved parts can be done using the so called multi-purpose top trucks or multi-purpose vans, where the latter ones are larger in number and have similar operative characteristics. In the different figures the same elements are indicated using the same reference numbers.

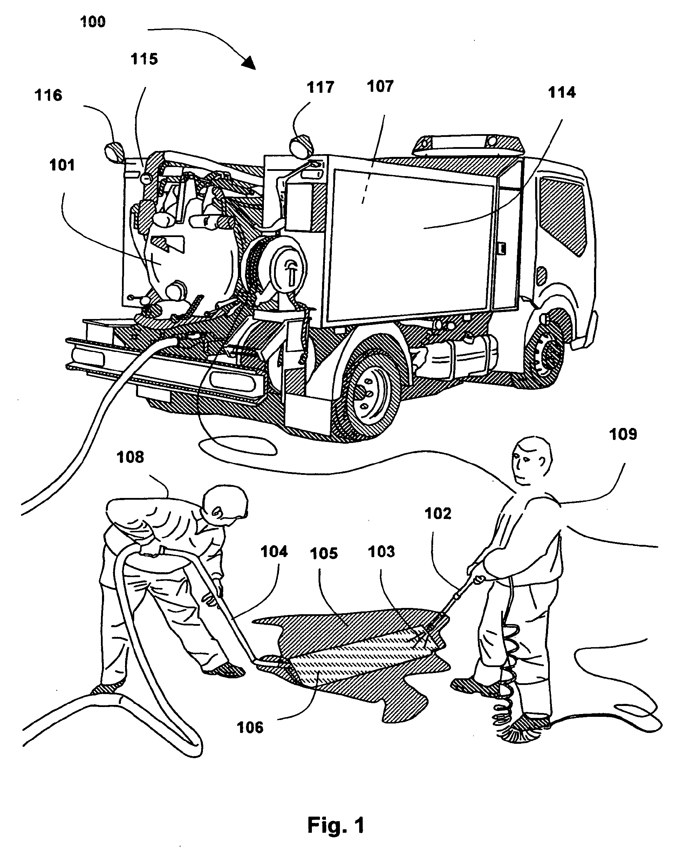

In figure 1 it is illustrated a vehicle 100 during the operations of cleaning and extraordinary maintenance of road platform and related parts involved in a car accident. This vehicle is part of a national intervention network that is coordinated by an operative Headquarter that receives all the intervention calls coming from all the national territory. The requests are received directly, through an Italian toll free phone number "800.014.014", that is active 24 hours per day, 365 days per year.

When a telephone call arrives, a worker of the Headquarter calls the local operator and ask him to go on site, and to start the activities of re-establishment of normal road conditions, through cleaning and maintenance of the road platform, and related parts involved in the car accident.

During the travel, the operator uses a special navigation system, installed in vehicle 100, connected to a data base containing detailed maps with indications of the best way to reach any destination in the shortest possible time, with particular reference to roads available for special and heavy vehicles. When the operator arrives on site of accident, he has the first duty of recognizing exactly the nature of materials and eventual chemical substances to be treated and/or removed, so that he can implement the proper recovering methods in cooperation with personnel of the Headquarter.

In order to accomplish this goal, the operator has some computing means, available in said vehicle 100, connected to a data base containing:
- list of dangerous goods, with reference to their chemical-physical features and proper handling procedures, in respect of the possible events of leakage, fire, or environmental dispersion (R.I.N. code - Risk Identification Number, former Kemler-Onu);
- position, on national territory, of industrial structures able to operate and handling said dangerous transported goods, in order to prevent further relevant disasters;
- list of plants, associated to class of environmental risk, so that it is possible to find, as soon as possible, at any place on the national territory, the closest to the place of accident, the same plants being able to provide production, treatment or storage for that specific dangerous materials, for which the intervention has been requested.

The communication between local operator and operative Headquarter can be integrated with audio/video clips, e-mails, digital photos, etc., everything transmitted in real time, using the same computing means available in vehicle 100, like i.e. PDAs, mobile phones of the latest generation, connected through the mobile telephone network, or the satellite or wireless telecommunication network.

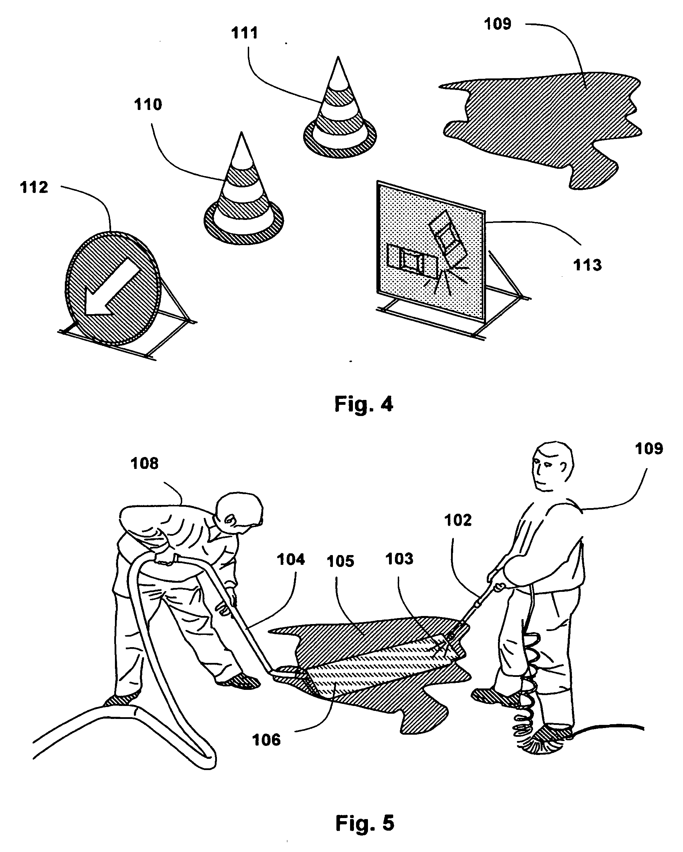

In case the situation requires a standard intervention (that means 15 squared meters of cleaning and extraordinary maintenance of the road platform and related parts covered of polluting materials and/or debris where more than two vehicles are involved, with further 10 squared meters per vehicle), then operators provide first of all to install the road signs 110, 111, 112, 113 (figure 4) and then to start operations. Said road signs are available inside the multi-purpose vehicle 100 and are usually stored in the lateral containers 114 and 115 (figure 1). In the same containers 114 and 115 can be stored other accessories (like i.e. connecting pipes, cables, flash lights, lights, extinguishers and other tools), the equipment of operators (fireproof coveralls, protective helmets, etc.) and other important instruments to be used on wreckage of vehicles (like i.e. a tin snip, a chainsaw and a pneumatic drill).

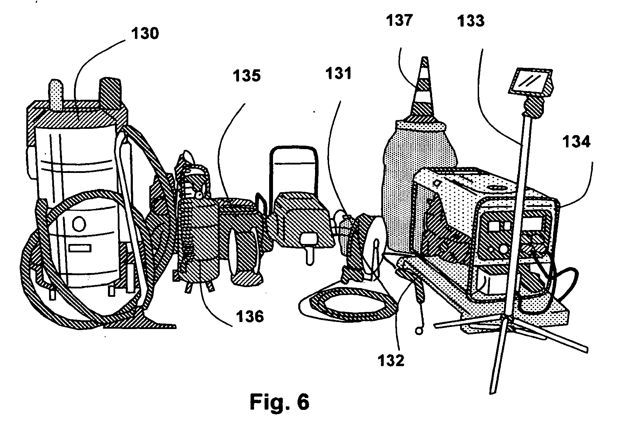

In figure 6 some basic devices available in vehicle 100 are better shown. They are: a mobile aspirator 130, a high-pressure sprinkler 132, a generator of electric energy 134, a special lighting apparatus, etc.

With reference again to figure 1, the multi-purpose vehicle 100 comprises as basic elements:
- a tank 101 containing a special washing liquid 103;
- means for delivering said special washing liquid 103 on the road platform, through a high-pressure jet 102;
- means for a fast suction 104, from the above road platform, of a resulting liquid 106 that is a mixture of said special washing liquid 103 and other liquids or polluting materials 105, eventually lost by vehicles involved in said car accidents;
- means for storage 107 of the above said resulting liquid 106, in order to submit it, as a special waste, to a special following treatment.

One time that the connection pipes are installed, connecting the terminal devices of the hydraulic circuit to respective independent tanks, placed in container 101 of vehicle 100, the operators 108 and 109 can start the operations of cleaning and extraordinary maintenance of road platform and related parts. The area is properly lighted up using the standard lamps 116 and 117 and other mobile devices, used especially during night interventions.

Operators 108 and 109 (figure 5) respectively use a sprinkler 102, in order to direct a high-pressure jet of liquid 103, and an aspirator 104 in order to quickly collect liquid 106 from road platform.

On the polluting material 105, that is usually composed of lubricating oils, fuels and other typical liquids of vehicle, it is sprayed a special fluid 103 that is a solution of water, ecological surfactant and molecular destroyer, that is mixed to the same polluting material 105, in order to constitute the so called resulting liquid 106, that is then suctioned and collected in proper tanks 107. In a second time, the resulting liquid 106 is transported to special collecting plants, where it is submitted to a process as a special waste.

The very important and novel characteristic of the present invention is the disclosure of a special washing liquid 103 composed of two innovative products: the ecological surfactant able to melt oils and the molecular destroyer, able to take apart the typical molecular chains of hydrocarbons and/or other organic or inorganic compounds, through respective chemical, physical, bacteriological processes, or their combination. More in particular, said special washing liquid 103 can be composed of the so called *molecular chain destroyer* (MCD), and the so called *oil eating bacteria* (OED). Both these products are particularly effective with reference to the treatment *in situ* of road platforms and soils polluted by materials belonging to the class of hydrocarbons.

The road platform is washed using a solution of water and ecological surfactant at 10%, and then using a quantity of water and molecular destroyer MCD at 5%. These solutions are not critical for the road platform and are immediately suctioned, so that the smallest residual particles of oil, fuel or liquid of the cooling circuits are removed very quickly. This first treatment achieves the immediate recovery of a safe surface condition and removes any possible slippery situation.

A similar technique is used for the surrounding soils, providing a suction of the polluting materials, as soon as possible, and a following high-pressure injection of solution in depth, using some special and specific drills. This process achieves the molecular degradation of the polluting materials, through action of the above said MCD product, that transforms the substances and makes them inert and completely compatible with the environment.

In case of a late intervention on a sandy or rocky soils, with the polluting materials reaching a significant depth, it would be required a second type of treatment, in order to accelerate the degradation process, that consists in an additional jet of *oil eating bacteria* (OEB), in a quantity of 200-300 cc per squared meter of soil. In such a way, residual particles of polluting materials, still not degradated, are immediately "eaten" by said bacteria. The *molecular chain destroyer* (MCD) is composed of: sodium metasilicate (0,16%-1,1%); sodium carbonate (0,15%-0,9%); non-ionic surfactant (0,02%-0,08%) and water (97,5%-99,1%). This product is a powerful adsorbent, it is particularly effective in order to remove smell, even being odorless, and it is fireproof. The main component, the sodium metasilicate, permits the micro-waterproofing through the creation of a gelatinous film that binds to precipitated particles, as soon as they are formed. The second component, the sodium carbonate, is able to realize the precipitation and embedment process involving the polluting materials. Specifically, the process is characterized by the following steps: the polymeric chain is broken; the particle is embedded; a non-slippery emulsion is generated; the natural micro-organisms provide a degradation process. Once the environmental micro-organisms have completed their action, the obtained sub product is a gelatinous substance that is inert and not slippery.

The product based on oil eating bacteria OEB is composed, instead, of a solution containing non-toxic micro-organisms, and it is particularly useful for treatment of highly polluted sites, like i.e. in case of dispersion of raw petroleum, oil products, chlorophenols, sulphurs and their compounds, even in rivers, soils and natural waters. The OEB product is a light brown liquid, composed of selected bacteria able to degrade chlorine hydrocarbons, chlorophenols, oil chemical waste, oils, fat, sulphurs and their compounds; said solution being preferably used without dilution in waters to be cleaned (0.5 liters per m³), and approximately 200-300 cc per squared meter of surface to be treated.Furthermore, the same product has the following characteristics:
- it is a fireproof product, has a biodegradation level up to 98.4% and, for its specific nature, does not have any negative consequence on the environment;
- it is not dangerous according to the content of European Directives 1999/45 and 2001/60, and their following amendments and integrations;
- it is not toxic according to Italian law D.Lgs. 14/03/2003, n.65, that rules the above directives on the Italian territory with reference to classification, packaging and labelling of dangerous products;
- it is not required the classification and labelling (according to Italian law D.M. 28 January 1992, 88/379 CEE).

In both the solutions of the MCD and OEB products, in the molecular disaggregation process it is created water (H₂O) and carbon dioxide (CO₂), energy, and some not significant and stable residuals of the treated materials (usually a gelatinous, inert and not slippery substance): mineralized mud, absolutely compatible with the environment. This technique, the so called "ecological clearance" is then characterized by the following substantial advantages, in respect of any other procedure from the prior art: the soil structure is not modified; the intervention is done directly *in situ,* without any need to remove the soil, to treat it in special plants, and to bring it back on site; the washing process using MCD and the following treatment using OEB are completely eco-friendly; the described procedures are extremely quicker and cheaper than any standard method of treatment of polluted areas; the results have been checked and verified by respective Italian regional agencies for environmental protection (ARPA).

One time that operations of cleaning and extraordinary maintenance of road platform and related parts are completed, the operators must update the information, using the same computing means available on the vehicle 100, in order to put in the data base:
- intervention form, with reference to arrival time on site, and departing time, of said operators 108, 109, description of the activities related to intervention;
- digital photos of the accident area.

In case it is required, instead, the clearance of the territory, because some big dispersions have occurred, or some dangerous or toxic materials have been lost in the environment, situations as described in the Italian law 334/1999 (Seveso), the Headquarter further contacts the most qualified companies in the country, usually operative partners of the organization.

At the end of operation, the data base is updated with the following information:
- intervention form related to involved persons in the accident and activities provided by operators;
- accident report, realized by Police, with reference to activities performed in order to return practicable road conditions, to manage the emergency of people and vehicles, and to collect the usual measurement data;
- for relevant accidents, some special reports prepared by experts with reference to general situation and activities provided by operators;
- digital photos of the accident area,
- intervention form, with reference to arrival time on site, and departing time, of said operators 108, 109, description of the activities related to intervention;
- digital photos of the accident area,
- copy of account invoices, concerning all the works required by the specific situations (for relevant accidents).

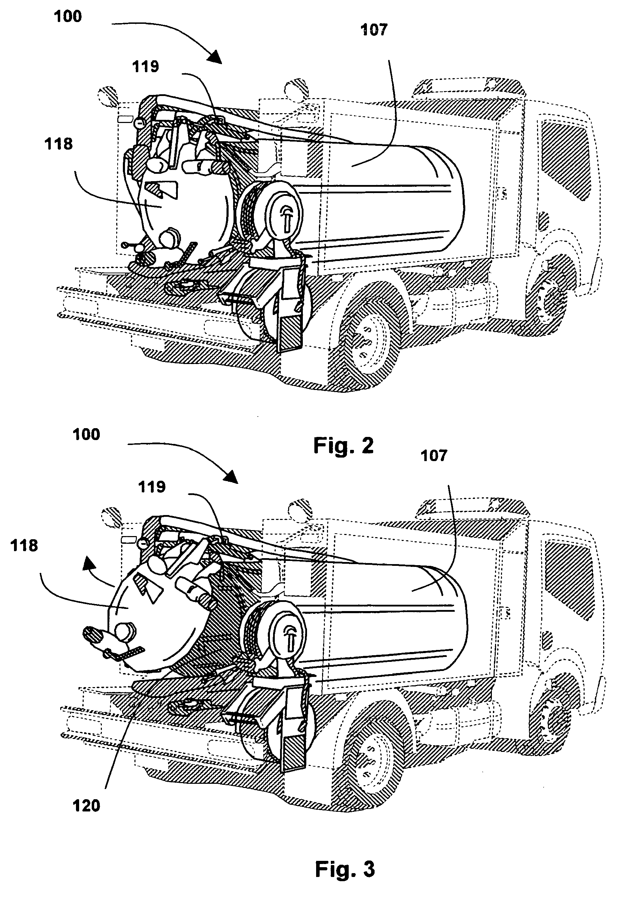

As described already, following the operations, the liquid collected and stored inside tank 107 of vehicle 100 (figures 3 and 4) is transported in a special treatment plant, where it is processed as a special waste. In order to provide a quick emptying of tank 107, and the related easy cleaning and maintenance, it comprises a proper door 118 with an hydraulic command 119, that allows the complete lateral opening of the container and the fast emptying of the same.

Therefore, the above examples show that the present invention achieves all the proposed objectives. In particular, it proposes a multi-purpose vehicle, particularly suitable as an emergency vehicle supporting the activities addressed to re-establish safe and practicable road conditions, through cleaning and extraordinary maintenance of road platform and related parts involved in car accidents, and that means through aspiration and collection of liquids and other polluting materials eventually lost on the road.

Then, additionally to the vehicle some integrated databases can be used suitable to give an immediate information about risk factors, and consequently to find respective operators able to take in charge the problem, like i.e. treatment of goods that are dangerous for public health and for environmental safety.

Again, the present invention permits to submit the collected polluting materials, stored inside the multi-purpose vehicle, to a neutralization process able to decrease or cancel the risk factor. The same invention permits to submit the polluting materials, that have been not collected and that have been lost on the road platform or in the surrounding soil area, to a neutralization process able to decrease or cancel the risk factor.

Furthermore, additionally to the vehicle some integrated navigation systems, can be used particularly suitable to lead the workers, in real time, to the exact site of accidents, and provides some integrated means, able to trace the actions of intervention, and to store the related technical and photographic documents inside the computer system, in digital format.

The present invention has been described for illustrative but not limitative purposes, according to its preferred embodiments, but it is clear that modifications and/or changes can be introduced by those skilled in the art without departing from the relevant scope, as defined in the enclosed claims.

## Claims

1. A multi-purpose vehicle (100), for cleaning and maintenance of road platform and related parts involved in car accidents, comprising:
- means for storage (101) of a washing liquid (103)
- means for delivering said washing liquid (103) on the road platform, through a highpressure jet (102);
- means for a fast suction (104), from the above road platform, of liquids or polluting materials; and
- means for storage (107) of a resulting liquid (106), which is a mixture of said washing liquid (103) and other liquids or polluting materials (105), **characterized in that** said means for storage (101) of the washing liquid contains a washing liquid composed of a solution containing: water with an ecological surfactant, and water with so called *molecular chain destroyer* (MCD), the latter composed of:
- sodium metasilicate (0,16%-1,1%);
- sodium carbonate (0,15%-0,9%);
- non-ionic surfactant (0,02%-0,08%);
- water (97,5%-99,1%),
so that the main component, the sodium metasilicate, permits the micro-waterproofing through the creation of a gelatinous film that binds to precipitated particles, as soon as they are formed; the second component, the sodium carbonate, is able to realize the precipitation and embedment process involving the polluting materials.

2. A multi-purpose vehicle (100), for cleaning and maintenance of road platform and related parts involved in car accidents, according to previous claim 1, **characterized in that**:
- said washing liquid (103) is composed of a solution additionally containing a so called *oil eating bacteria* (OEB), that is a solution containing selected bacteria able to degrade chlorine hydrocarbons, chlorophenols, oil chemical waste, oils, fat, sulphurs and their compounds; said solution being preferably used without dilution in waters to be cleaned (0.5 liters per m³), and approximately 200-300 cc per squared meter of surface to be treated.

3. A multi-purpose vehicle (100), for cleaning and maintenance of road platform and related parts involved in car accidents, according to one or more of previous claims, **characterized by** further including:
- computing means connected, directly or through a remote connection, to a data base able to provide data acquisition, data storage and data retrieval,
said data being related to:
- intervention form, with reference to arrival time on site, and departing time, of said operators (108, 109), description of the activities related to intervention;
- digital photos of the accident area.

4. A multi-purpose vehicle (100), for cleaning and maintenance of road platform and related parts involved in car accidents, according to one or more of previous claims, **characterized by** further including:
- computing means connected directly or through a remote connection, to a data base able to provide data acquisition, data storage and data retrieval,
said data being related to:
- intervention form related to involved persons in the accident and activities provided by operators;
- accident report, realized by Police, with reference to activities performed in order to return practicable road conditions, to manage the emergency of people and vehicles, and to collect the usual measurement data;
- for relevant accidents, some special reports prepared by experts with reference to general situation and activities provided by operators;
- digital photos of the accident area,
- intervention form, with reference to arrival time on site, and departing time, of said operators (108, 109), description of the activities related to intervention;
- digital photos of the accident area,
- copy of account invoices, concerning all the works required by the specific situations (for relevant accidents).

5. A multi-purpose vehicle (100), for cleaning and maintenance of road platform and related parts involved in car accidents, according to one or more of previous claims, **characterized by** further including:
- computing means connected, directly or through a remote connection, to a data base able to provide data acquisition, data storage and data retrieval,
said data being related to:
- list of dangerous goods, with reference to their chemical-physical features and proper handling procedures, in respect of the possible events of leakage, fire, or environmental dispersion (R.I.N. code - Risk Identification Number, former Kemler-Onu);
- position, on national territory, of industrial structures able to operate and handling said dangerous transported goods, in order to prevent further relevant disasters;
- list of plants, associated to class of environmental risk, so that it is possible to find, as soon as possible, at any place on the national territory, the closest to the place of accident, the same plants being able to provide production, treatment or storage for that specific dangerous materials, for which the intervention has been requested.

6. A multi-purpose vehicle (100), for cleaning and maintenance of road platform and related parts involved in car accidents, according to one or more of previous claims, **characterized by** further including:
- computing means connected, directly or through a remote connection, to a data base able to provide data acquisition, data storage and data retrieval,
said data being related to:
- detailed maps representing the national territory, with indications of the best way to reach any destination in the shortest possible time, with particular reference to roads available for special and heavy vehicles,
so that an integrated navigation system is directly available, and it is particularly suitable to lead operators in real time to the exact place of accident.

7. A multi-purpose vehicle (100), for cleaning and maintenance of road platform and related parts involved in car accidents, according to one or more of previous claims from 3 to 6, **characterized in that**:
- said computing means include one or more mobile phones of the latest generation, connected through the mobile telephone network, or the satellite or wireless telecommunication network, said phones being able to send/receive text messages, audio/video clips, e-mails and digital photos.

8. A multi-purpose vehicle (100), for cleaning and maintenance of road platform and related parts involved in car accidents, according to one or more of previous claims from 3 to 6, **characterized in that**:
- said computing means include one or more mobile computers, connected to *internet,* through the mobile telephone network, or the satellite or wireless telecommunication network, said computers being able to send/receive multimedia content, through FTP, web server, and electronic mail.

## Patentansprüche

1. Ein Mehrzweckfahrzeug (100) für die Reinigung und Wartung der Fahrbahn und ihr dazugehöriges Zubehör von Straßenunfällen, das Folgendes umfasst:
- Fahrzeuge für die Speicherung (101) einer Reinigungsflüssigkeit (103);
- Fahrzeug für den Schnellablass (102), auf dem Straßenbelag, der obengenannten speziellen Reinigungsflüssigkeit (103);
- Fahrzeuge für die schnelle Absaugung (104), vom Straßenbelag, von umweltschädlichen Flüssigkeiten oder Materialien (105); und
- Fahrzeuge für die Speicherung (107) einer Flüssigkeit (106), die aus der Mischung der obengenannten Reinigungsflüssigkeit (103) und anderen umweltschädlichen Flüssigkeiten oder Materialien (105) besteht, ausgezeichnet durch die Tatsache, dass die obengenannten Fahrzeuge für die Speicherung (101) einer Reinigungsflüssigkeit eine Reinigungsflüssigkeit enthalten, die aus einer Lösung besteht, die Folgendes enthält: Wasser mit einem ökologischen Tensid und einer Wasserlösung, die einen sogenannten *Disruptor der Molekülkette* (MCD) enthält, diese letzte Lösung besteht aus:
- Natriummetasilikat (0,16%-1,1%);
- Natriumcarbonat (0,15%-0,9%);
- nicht-ionisches Tenside (0,02%-0,08%);
- Wasser (97,5%-99,1%),
so dass, die zwei Hauptkomponenten, das Natriummetasilikat und die alkalischen Silikate, die Mikroabdichtung durch die Bildung einer gallertartigen Folie ermöglichen, welche die Aufgabe hat, die Granulate der Niederschläge abzukapseln, sobald sich diese gebildet haben; während die zweite Komponente, das Natriumcarbonat hingegen die Aufgabe hat, den Prozess des Niederschlags und der Abkapselung der Schadstoffe zu stabilisieren.

2. Ein Mehrzweckfahrzeug (100) für die Reinigung und Wartung der Fahrbahn und ihr dazugehöriges Zubehör von Straßenunfällen gemäß dem vorherigen Anspruch 1, **gekennzeichnet durch** die Tatsache, dass:
- besagte spezielle Reinigungsflüssigkeit (103) aus einer Lösung besteht, die zusätzlich die sogenannten *ölbauenden Bakterien* (OEB) umfasst, die aus ausgewählten Bakterien bestehen, um Chlorkohlenwasserstoffe, Chlorphenole, petrochemische Rückstände, Öle, Fette, Schwefel und Derivate abzubauen, die vorzugsweise ohne Verdünnung im zu reinigenden Wasser (0,5-1 Liter pro m³) und im Verhältnis von 200-300 cc pro m² zu bespritzende Oberfläche verwendet wird.

3. Ein Mehrzweckfahrzeug (100) für die Reinigung und Wartung der Fahrbahn und ihr dazugehöriges Zubehör von Straßenunfällen gemäß einem oder mehreren der vorherigen Ansprüche, **gekennzeichnet durch** die Tatsache, dass es zusätzlich Folgendes umfasst:
- Computereinrichtungen, die direkt oder über eine Remote-Verbindung, mit einer Datenbasis verbunden sind, die für die Erfassung, für die Speicherung und für die Wiederbeschaffung der Informationen geeignet ist,
wobei sich besagte Informationen auf Folgendes beziehen:
- *"Anwesenheitskarte",* mit Bezug auf die Ankunftszeit am Ort der obengenannten Bediener (108, 109) und auf das Ende des Eingriffs, Beschreibung der durchgeführten Aktivitäten;
- fotografische Vermessungen in digitalem Format der Unfallstelle.

4. Ein Mehrzweckfahrzeug (100) für die Reinigung und Wartung der Fahrbahn und ihr dazugehöriges Zubehör von Straßenunfällen gemäß einem oder mehreren der vorherigen Ansprüche, **gekennzeichnet durch** die Tatsache, dass es zusätzlich Folgendes umfasst:
- Computereinrichtungen, die direkt oder über eine Remote-Verbindung, mit einer Datenbasis verbunden sind, die für die Erfassung, für die Speicherung und für die Wiederbeschaffung der Informationen geeignet ist,
wobei sich besagte Informationen auf Folgendes beziehen:
- *"Formular für die Erfassung von nicht-sensiblen Daten und durchgeführten Aktivitäten";*
- *"Unfallbericht",* der von der intervenierten Polizeistelle verfasst wurde, um den Straßenzustand zu verwalten und sowohl den mechanischen als auch medizinischen Rettungsdienst sowie die routinemäßigen Vermessungen zu betreuen;
- für die schwereren Fälle, spezifische Berichte über die Situation und über die durchgeführten Eingriffe, die von Experten ausgearbeitet wurden;
- zusätzliche fotografische Vermessungen in digitalem Format der Unfallstelle;
- Kopie der Rechnungen der ausgeführten Arbeiten, deren Eingriff für die Eigenart der Situation *("gravierende Unfälle")* als unverzichtbar angesehen wurden.

5. Ein Mehrzweckfahrzeug (100) für die Reinigung und Wartung der Fahrbahn und ihr dazugehöriges Zubehör von Straßenunfällen gemäß einem oder mehreren der vorherigen Ansprüche, **gekennzeichnet durch** die Tatsache, dass es zusätzlich Folgendes umfasst:
- Computereinrichtungen, die direkt oder über eine Remote-Verbindung, mit einer Datenbasis verbunden sind, die für die Erfassung, für die Speicherung und für die Wiederbeschaffung der Informationen geeignet ist,
wobei sich besagte Informationen auf Folgendes beziehen:
- die Liste mit gefährlichen Gütern, mit Hinweis auf ihre chemisch-physikalischen Eigenschaften und die entsprechenden Behandlungsmethoden bei etwaigen Verschüttungen, Bränden und Freisetzungen in die Umwelt (N.I.P.- *Nummer zur Kennzeichnung der Gefahr,* ex Kemler-Zahl);
- die Lage aller Industrieanlagen auf dem nationalen Gebiet, die geeignet sind, die obengenannten gefährlichen transportierten Güter zu bedienen und zu behandeln für die Prävention von Risiken wegen *"gravierender Unfälle",*
- die Liste aller Werke, aufgeteilt nach Umweltrisikofaktoren, so, dass es möglich ist - auf jedem Ort des Staatsgebietes und in kürzester Zeit - die zu dem Ort des Vorfalls nahegelegensten zu finden, die dieses spezielle Gefahrengut, von dem die Behandlung angefordert wurde, produzieren, verarbeiten oder lagern können.

6. Ein Mehrzweckfahrzeug (100) für die Reinigung und Wartung der Fahrbahn und ihr dazugehöriges Zubehör von Straßenunfällen gemäß einem oder mehreren der vorherigen Ansprüche, **gekennzeichnet durch** die Tatsache, dass es zusätzlich Folgendes umfasst:
- Computereinrichtungen, die direkt oder über eine Remote-Verbindung, mit einer Datenbasis verbunden sind, die für die Erfassung, für die Speicherung und für die Wiederbeschaffung der Informationen geeignet ist,
wobei sich besagte Informationen auf Folgendes beziehen:
- detaillierte Karten des Staatsgebiets mit entsprechenden Hinweisen der Strecken, um jeden Zielort in kürzester Zeit zu erreichen, mit besonderem Hinweis auf die möglichen Strecken für Spezialfahrzeuge und übergroße Fahrzeuge.
um ein integriertes Navigationssystem zu implementieren, das besonders geeignet ist, um die Bediener "in Echtzeit" zum exakten Unfallort zu führen.

7. Ein Mehrzweckfahrzeug (100) für die Reinigung und Wartung der der Fahrbahn und ihr dazugehöriges Zubehör von Straßenunfällen gemäß einem oder mehreren der vorherigen Ansprüche von 3 bis 6, **gekennzeichnet durch** die Tatsache, dass:
- die besagten Computereinrichtungen aus einem oder mehreren Mobiltelefonen der neuesten Generation bestehen, die über ein Mobiltelefon, Satelliten- oder nationales *wireless-* Netz miteinander verbunden sind und in der Lage sind, Textnachrichten, Audio- und Videofrequenzen, E-Mails, Fotografien in digitalem Format zu versenden und zu erhalten.

8. Ein Mehrzweckfahrzeug (100) für die Reinigung und Wartung der Fahrbahn und ihr dazugehöriges Zubehör von Straßenunfällen gemäß einem oder mehreren der vorherigen Ansprüche von 3 bis 6, **gekennzeichnet durch** die Tatsache, dass:
- besagte Computereinrichtungen aus einem oder mehreren *personal computer* bestehen, die über *Internet,* Mobiltelefon, Satelliten- oder nationales *wireless-* Netz miteinander verbunden sind und in der Lage sind, multimediale Inhalte via FTP, *web server und* E-Mails zu versenden und zu erhalten.

## Revendications

1. Un véhicule multifonctions (100) pour le nettoyage et l'entretien de la plate-forme routière et de ses équipements touchés par des accidents de la route, comprenant:
- des moyens pour le stockage (101) d'un liquide de lavage (103);
- des moyens d'expulsion rapide (102) sur la chaussée dudit liquide spécial de lavage (103);
- des moyens d'aspiration rapide (104) des liquides ou matières polluantes (105) se trouvant sur la chaussée; et
- des moyens pour le stockage (107) du liquide résultant (106) du mélange dudit liquide de lavage (103) avec d'autres liquides ou matières polluantes (105), **caractérisé par le fait que** lesdits moyens de stockage (101) du liquide de lavage contiennent un liquide de lavage composé d'une solution contenant: de l'eau avec un agent tensioactif écologique et une solution à base d'eau contenant un *désagrégateur de chaîne moléculaire* (MCD), cette dernière solution étant composée de:
- métasilicate de sodium (0,16%-1,1%);
- carbonate de sodium (0,15%-0,9%);
- agents tensioactifs non ioniques (0,02%-0,08%);
- eau (97,5%-99,1%),
de telle sorte que les deux principaux composants, le métasilicate de sodium et les silicates alcalins, favorisent la micro-imperméabilisation à travers la formation d'une pellicule gélatineuse qui doit encapsuler les grains des précipités dès qu'ils se forment; tandis que le second composant, le carbonate de sodium, doit en revanche stabiliser le processus de précipitation et d'encapsulation des agents polluants.

2. Un véhicule multifonctions (100) pour le nettoyage et l'entretien de la plate-forme routière et de ses équipements touchés par des accidents de la route, selon la précédente revendication 1, **caractérisé par le fait que**:
- ledit liquide spécial de lavage (103) est constitué d'une solution comprenant également les dites *bactéries dégradant le pétrole* (OEB) composées de bactéries sélectionnées pour dégrader les hydrocarbures chlorées, les chlorophénols, les résidus de la pétrochimie, les huiles, les graisses, le soufre et ses dérivés, utilisé de préférence sans dilution dans les eaux à assainir (0,5-1 litre par m³) et à raison de 200-300 cc par m² de surface à arroser.

3. Un véhicule multifonctions (100) pour le nettoyage et l'entretien de la plate-forme routière et de ses équipements touchés par des accidents de la route, selon une ou plusieurs revendications précédentes, **caractérisé par** le fait de comprendre en outre:
- des moyens informatiques connectés, directement ou par connexion à distance, à une base de données destinée à l'acquisition, au stockage et à la récupération d'informations,
lesdites informations étant relatives à:
- *"fiche d'intervention",* avec référence de l'heure d'arrivée sur place desdits opérateurs (108, 109) et de fin d'intervention, description des activités effectuées;
- relevés photographiques au format numérique du lieu de l'accident.

4. Un véhicule multifonctions (100) pour le nettoyage et l'entretien de la plate-forme routière et de ses équipements touchés par des accidents de la route, selon une ou plusieurs revendications précédentes, **caractérisé par** le fait de comprendre en outre:
- des moyens informatiques connectés, directement ou par connexion à distance, à une base de données destinée à l'acquisition, au stockage et à la récupération d'informations,
lesdites informations étant relatives à:
- *"formulaire pour collecte de données non sensibles et octivité exercée";*
- *"constat d'occident"* rédigé par le corps de Police intervenu pour gérer la circulation, assurer l'assistance mécanique et médicale, ainsi que les relevés d'usage;
- pour les cas plus graves, rapports spécifiques, rédigés par des experts, sur la situation et les interventions effectuées;
- relevés photographiques supplémentaires au format numérique du lieu de l'accident;
- copie des factures des travaux effectués dont l'intervention a été jugée indispensable pour la spécificité de la situation ("*accidents majeurs*").

5. Un véhicule multifonctions (100) pour le nettoyage et l'entretien de la plate-forme routière et de ses équipements touchés par des accidents de la route, selon une ou plusieurs revendications précédentes, **caractérisé par** le fait de comprendre en outre:
- des moyens informatiques connectés, directement ou par connexion à distance, à une base de données destinée à l'acquisition, au stockage et à la récupération d'informations,
lesdites informations étant relatives à:
- la liste des marchandises dangereuses, indiquant leurs caractéristiques chimiques et physiques et les modalités appropriées pour leur traitement en cas d'éventuels déversements, incendies et rejets dans l'environnement (N.I.P.- *Numéro d'Identification Danger,* ex *Kemler-Onu);*
- la localisation sur le territoire national de toutes les installations industrielles pouvant intervenir et traiter lesdites marchandises dangereuses transportées, pour la prévention des risques *"d'accidents majeurs";*
- la liste de tous les installations réparties par facteur de risque environnemental, de manière à pouvoir identifier - sur tout le territoire national et le plus rapidement possible - les installations les plus proches du lieu de l'accident, qui produisent, transforment ou stockent la matière dangereuse en question, dont le traitement a été requis.

6. Un véhicule multifonctions (100) pour le nettoyage et l'entretien de la plate-forme routière et de ses équipements touchés par des accidents de la route, selon une ou plusieurs revendications précédentes, **caractérisé par** le fait de comprendre en outre:
- des moyens informatiques connectés, directement ou par connexion à distance, à une base de données destinée à l'acquisition, au stockage et à la récupération d'informations,
lesdites informations étant relatives à:
- des plans détaillés du territoire national, indiquant les itinéraires pour atteindre chaque lieu de destination le plus rapidement possible, en particulier les itinéraires relatifs aux véhicules spéciaux et encombrants.
de manière à mettre en oeuvre un système de navigation intégré particulièrement adapté pour guider les opérateurs "en temps réel" sur le lieu exact de l'accident.

7. Un véhicule multifonctions (100) pour le nettoyage et l'entretien de la plate-forme routière et de ses équipements touchés par des accidents de la route, selon l'une des précédentes revendications de 3 à 6, **caractérisé par le fait que**:
- lesdits moyens informatiques sont constitués par un ou plusieurs téléphones mobiles de dernière génération, connectés à travers le réseau national de téléphonie mobile, satellitaire ou *sans fil,* en mesure d'envoyer et de recevoir des messages textuels, des séquences audio et vidéo, des emails et des photographies numériques.

8. Un véhicule multifonctions (100) pour le nettoyage et l'entretien de la plate-forme routière et de ses équipements touchés par des accidents de la route, selon une ou plusieurs des précédentes revendications de 3 à 6, **caractérisé par le fait que**:
- lesdits moyens informatiques sont constitués par un ou plusieurs *ordinateurs* connectés à *Internet* à travers le réseau national de téléphonie mobile, satellitaire ou *sans fil,* en mesure d'envoyer et de recevoir du contenu multimédia par FTP, *server web* et courrier électronique.
